# EUROPÄISCHE PATENTSCHRIFT

(11) **EP 0 685 871 B1**
(45) Veröffentlichungstag und Bekanntmachung des Hinweises auf die Patenterteilung: **04.06.1997**
(21) Anmeldenummer: 95201422.3
(22) Anmeldetag: 31.05.1995
(51) Int. Cl.: H01J 35/10

(54) **Drehanoden-Röntgenröhre**
Rotating anode X-ray tube
Tube à rayons X à anode tournante

(30) Priorität: 04.06.1994 DE 4419697
(43) Veröffentlichungstag der Anmeldung: 06.12.1995
(73) Patentinhaber: Philips Patentverwaltung GmbH, 22335 Hamburg (DE); Philips Electronics N.V., 5621 BA Eindhoven (NL)
(72) Erfinder: Jacob, Heinz-Jürgen, D-20097 Hamburg (DE)
(74) Vertreter: Hartmann, Heinrich, Dipl.-Ing.

(56) Entgegenhaltungen:
- EP-A- 0 578 314

## Beschreibung

Die Erfindung betrifft eine Drehanoden-Röntgenröhre mit einem Gleitlager, insbesondere einem Spiralrillenlager, das eine Lagerachse und eine die Lagerachse umschließende, im wesentlichen Molybdän und/oder Wolfram oder deren Legierungen enthaltende und aus mindestens zwei Lagerteilen bestehende Lagerschale umfaßt, wobei zwischen der Lagerachse und der Lagerschale ein flüssiges Schmiermittel vorgesehen ist.

Eine solche Röntgenröhre ist aus der EP-OS 578 314 bekannt. Die Lagerschale und auch die Lagerachse bestehen aus einer Molybdän-Legierung (TZM), die einerseits durch die als flüssiges Schmiermittel benutzte Galliumlegierung benetzbar ist, andererseits von diesem Schmiermittel auch bei hohen Temperaturen 300°C und mehr nicht angegriffen wird. Die Lagerschale besteht aus mindestens zwei miteinander verbundenen Lagerteilen.

In der Praxis werden die Lagerteile durch eine Anzahl von parallel zur Symmetrieachse verlaufenden Schrauben miteinander verbunden. Diese Schraubverbindung muß sehr stark sein, um zu verhindern, daß das Schmiermittel durch den Spalt zwischen den Lagerteilen hindurch aus dem Lager austritt. Dies setzt große Wandstärken der Lagerschale voraus.

Es ist Aufgabe der vorliegenden Erfindung, eine Drehanoden-Röntgenröhre der eingangs genannten Art so auszugestalten, daß sie mit vergleichsweise geringem Aufwand herstellbar ist. Diese Aufgabe wird erfindungsgemäß dadurch gelöst, daß die Lagerteile auf ihrer Außenseite mit einem Verbindungsteil aus einem schweißfähigen Material versehen sind und daß die Verbindungsteile durch eine Schweißnaht miteinander verbunden sind. Die Verbindung zweier Lagerteile erfolgt dabei also durch Verschweißung der Verbindungsteile, die mit den Lager teilen verbunden sind. Damit wird die Tatsache berücksichtigt, daß eine direkte Verbindung der beiden aus Molybdän (oder Wolfram) bestehenden Lagerteile durch Schweißen oder durch Löten nicht möglich ist, jedenfalls nicht ohne Lagerschale auf eine Temperatur zu erhitzen, bei der das in ihr enthaltene Schmiermittel (in der Regel eine Galliumlegierung) mit dem Molybdän reagiert. Die Angabe, daß die Verbindungsteile aus schweißfähigem Material bestehen, besagt also, daß Teile aus diesem Material durch eine Schweißung verbindbar sein sollen, wobei die Temperatur des Schmiermittels nicht einen Wert annehmen soll, bei dem es mit dem Lagermaterial reagiert.

Bei dieser indirekten Verbindung der Lagerteile wird ein Austreten des Schmiermittels durch die Schweißnaht zwischen den Verbindungsteilen mit Sicherheit verhindert. Die Lagerteile müssen also nicht - wie bei einer Schraubverbindung - so aufeinander gepreßt werden, daß das Schmiermittel nicht durch den zwischen Ihnen befindlichen Spalt austreten kann. Sie können daher im Verbindungsbereich eine wesentlich geringere Wandstärke haben (z.B. 2 mm) als bei einem Gleitlager mit einer Schraubverbindung (ca. 10 bis 15 mm). Für das erfindungsgemäße Gleitlager wird daher weniger Molybdän benötigt als für ein Gleitlager mit einer Schraubverbindung, so daß die Kosten, das Volumen und das Gewicht des Gleitlagers reduziert werden. Ein weiterer wesentlicher Kostenvorteil ist der Wegfall der (Gewinde-) Bohrungen in den Molybdän- bzw. Wolframlagerteilen. Diese Bohrungen lassen sich nämlich nur mit großem Aufwand herstellen.

Auch wenn bei einer erfindungsgemäßen Drehanoden-Röntgenröhre zwischen den einander zugewandten Stirnflächen der Lagerteile nur ein kleiner Spalt verbleibt, läßt sich nicht ausschließen, daß das Schmiermittel durch diesen Spalt hindurch die Verbindungsteile bzw. die Schweißnaht erreicht und damit reagiert. Um dieses zuverlässig zu verhindern, ist gemäß einer Weiterbildung vorgesehen, daß die einander zugewandten Stirnflächen zumindest eines Teils der Lagerteile mit einem vom Schmiermittel nicht benetzbaren Überzug versehen sind.

In weiterer Ausgestaltung der Erfindung ist vorgesehen, daß bei einer die Verbindungsteile aus einer Eisen, Nickel und Kobalt enthaltenden Legierung bestehen. Eine solche Legierung hat in dem für ein Gleitlager relevanten Temperaturbereich näherungsweise den gleichen thermischen Ausdehnungskoeffizienten wie Molybdän. In noch weiterer Ausgestaltung ist dabei vorgesehen, daß die Verbindungsteile an die Lagerteile angelötet sind. Die Eisen-Nickel-Kobalt-Legierung läßt sich nämlich gut an Molybdän anlöten. Das Lagerteil kann dabei zwar Temperaturen annehmen, die über den zulässigen Betriebstemperaturen des Gleitlagers liegen, jedoch ist dies nicht weiter störend, weil das Anlöten der Verbindungsteile erfolgen kann, bevor das Schmiermittel in die Lagerschale eingefüllt wird.

Eine bevorzugte Weiterbildung der Erfindung sieht vor, daß die Verbindungsteile und die Lagerteile gemeinsame Stirnflächen haben. Es wäre zwar auch möglich, die Stirnflächen der Lagerteile einerseits und der Verbindungsteile andererseits in unterschiedlichen Ebenen zu belassen, doch ist die Herstellung einer gemeinsamen Stirnfläche einfacher, weil das Verbindungsteil und das zugehörige Lagerteil, nachdem sie miteinander z.B. durch Lötung verbunden sind, lediglich gemeinsam plan geschliffen werden müssen.

Die Erfindung wird nachstehend anhand der Zeichnungen näher erläutert. Es zeigen:
- Fig. 1: eine Röntgenröhre mit einem erfindungsgemäßen Gleitlager,
- Fig. 2: Teil A die Lagerachse eines solchen Gleitlagers,

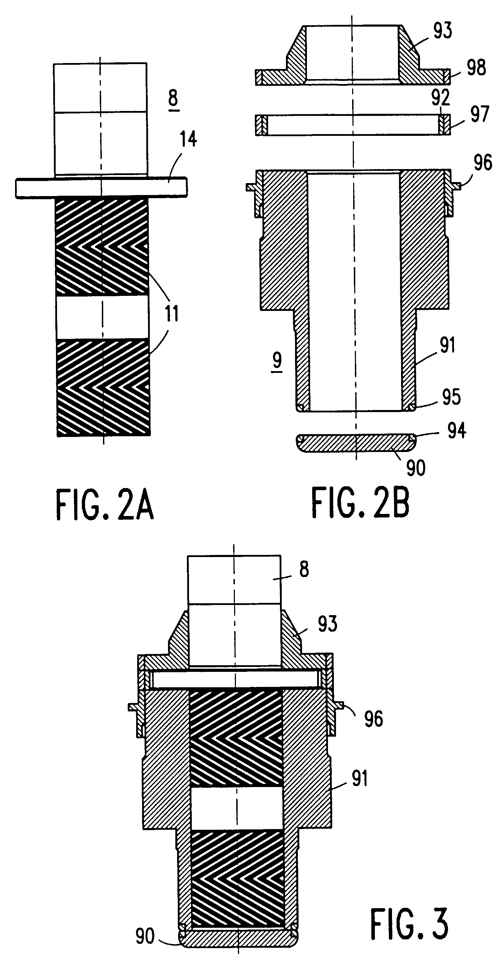

- Fig. 2: Teil B die einzelnen Lagerteile der Lagerschale eines solchen Gleitlagers und
- Fig. 3: das zusammengebaute Gleitlager.

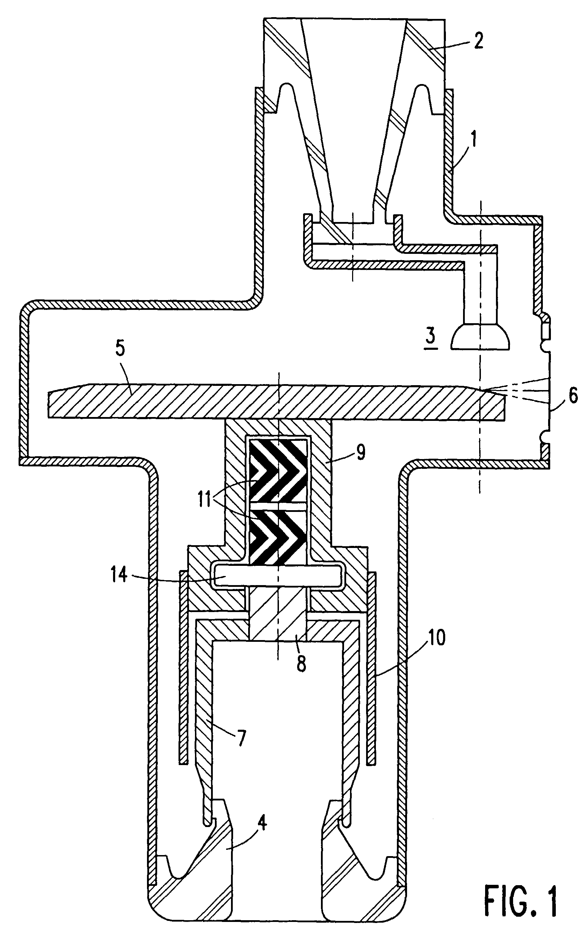

Die in Fig. 1 dargestellte Drehanoden-Röntgenröhre besitzt einen Metallkolben 1, an dem über einen ersten Isolator 2 die Kathode 3 und über einen zweiten Isolator 4 die Drehanode befestigt ist. Die Drehanode umfaßt eine Anodenscheibe 5, auf deren der Kathode gegenüberliegenden Fläche beim Einschalten einer Hochspannung Röntgenstrahlung erzeugt wird. Die Röntgenstrahlung kann durch ein Strahlenaustrittsfenster 6 austreten, das im Kolben angeordnet ist und vorzugsweise aus Beryllium besteht. Die Anodenscheibe 5 ist über eine Lageranordnung mit einem Trägerkörper 7 verbunden, der an dem zweiten Isolator 4 befestigt ist. Die Lageranordnung umfaßt eine fest mit dem Trägerkörper 7 verbundene Lagerachse 8 und eine die Lagerachse 8 konzentrisch umschließende Lagerschale 9, die an ihrem unteren Ende einen Rotor 10 zum Antrieb der am oberen Ende befestigten Anodenscheibe aufweist. Die Lagerachse 8 und die Lagerschale 9 bestehen aus einer Molybdänlegierung (TZM). Stattdessen kann aber auch Molybdän, Wolfram oder eine Wolfram-Legierung verwendet werden.

An ihrem oberen Ende ist die Lagerachse 8 mit zwei in axialer Richtung gegeneinander versetzten, fischgrätartigen Rillenmustern 11 zur Aufnahme radialer Kräfte vorgesehen. Der zylindermantelförmige Spalt zwischen den Rillenmustern 11 und der Lagerschale 9 ist mit einem flüssigen Schmiermittel gefüllt, vorzugsweise einer Galliumlegierung. Die Breite des Spaltes entspricht beispielsweise der Tiefe der Rillen und kann in der Praxis zwischen 10 µm und 30 µm liegen. Wenn die Drehanode in der vorgeschriebenen Drehrichtung rotiert, wird das Schmiermittel in den Bereich des Rillenmusters transportiert, in dem die Rillen paarweise zusammenlaufen. Hier baut sich im Schmiermittel ein Druck auf, der radial auf das Lager wirkende Kräfte aufnehmen kann.

Im Anschluß an den mit Rillenmuster 11 für die radiale Lagerung versehen Bereich hat die Achse 8 einen mehreren mm dicken Abschnitt 14, dessen Durchmesser wesentlich größer ist als der Durchmesser des übrigen Teils der Lagerachse 8. Darunter folgt noch ein Abschnitt, dessen Durchmesser zumindest annähernd dem Durchmesser der Lagerachse 8 im oberen Bereich entspricht, der mit dem Trägerkörper 7 ist. Die Innenkontur der Lagerschale 9 ist der Außenkontur der Lagerachse angepaßt. Die freien Stirnflächen auf der Ober- und auf der Unterseite des Abschnitts 14 - oder die gegenüberliegenden Flächen in der Lagerschale 9 - sind mit Spiralrillenmustern versehen. Durch diese Gestaltung können in axialer Richtung verlaufende Lagerkräfte aufgenommen werden.

In Fig. 1 ist eine einteilige Lagerschale 9 dargestellt. Für den Fachmann ist jedoch klar, daß die Lagerschale 9 aus mehreren Teilen bestehen muß. Dies ergibt sich aus Fig. 2, deren Teil A die Lagerachse 8 und deren Teil B die einzelnen, zu der Lagerschale 9 gehörenden Lagerteile darstellt - und zwar in umgekehrter Position wie die Fig. 1. Die Lagerschale 9 umfaßt einen Deckel 90, der dem Abschluß eines Zylinders 91 dient, das den mit den Spiralrillenmustern 11 versehenen Teil der Lagerachse 8 aufnimmt. Weiter gehört zu den Lagerteilen der Lagerschale 9 ein Lagerring 92, dessen axiale und radiale Abmessungen geringfügig größer sind als die entsprechenden Abmessungen des Abschnitts 14 der Lagerachse 8. Schließlich umfaßt die Lagerschale noch einen Lagerteil 93, der den von den Rillenmustern 11 abgewandten Teil der Lagerachse 8 umschließt.

Der Zusammenbau des Gleitlagers vollzieht sich folgendermaßen. Zunächst werden die Lagerteile 90 . . . 93 mit ringförmigen Verbindungsteilen 94 . . . 98 versehen. Diese Verbindungsteile bestehen aus einem Material, das sich gut schweißen und mechanisch bearbeiten läßt, z.B. einer Eisen-Nickel-Kobalt-Legierung (derartige Legierungen sind unter den Handelsnamen Vacon oder Kovar bekannt), die den weiteren Vorteil hat, daß sie in dem Bereich der Betriebstemperatur des Lagers annähernd den gleichen thermischen Expansionskoeffizienten hat wie Molybdän bzw. TZM, aus dem die Lagerteile 90 . . . 93 bestehen. Die Verbindungsteile 94 . . . 98 sind entweder in die Lagerteile 90 . . . 93 eingelassen, wie die Verbindungsteile 94, 95 in dem Deckel 90 bzw. dem ihm zugewandten Ende des Lagerteils 91, oder sie umschließen das zugehörige Lagerteil wie die Ringe 96, 97 oder 98, die das obere Ende des Lagerteils 91, den Ring 92 oder den Lagerteil 93 umschließen.

Die Verbindungsteile 94 . . . 98 werden jeweils durch eine Hartlötung mit dem zugehörigen Lagerteil 90 . . . 93 verbunden. Danach werden - jeweils in zur Lagerachse senkrechten Ebenen - die Stirnflächen aller Teile plangeschliffen, so daß die Stirnfläche eines Lagerteils (z.B. 90) und des zugehörigen Verbindungsteils (94) jeweils in einer gemeinsamen Ebene liegen. Danach werden die untere Stirnfläche des Lagerteils 91 und die beiden Stirnflächen des ringförmigen Lager- und Verbindungsteils 92/97 mit einem von dem Schmiermittel nicht benetzbaren Überzug versehen.

Bei einer Galliumlegierung als Schmiermittel kann dieser Überzug beispielsweise mit Hilfe einer Titan-Acetylacetonat (TiAcAc)-Alkohol-Lösung erzeugt werden. Nach dem Auftragen dieser Lösung und einer nachfolgenden Wärmebehandlung bildet sich auf den Stirnflächen ein Überzug aus u.a. Titandioxid, der eine Benetzung dieser Flächen durch das Schmiermittel unterbindet. Dadurch wird verhindert, daß das Schmiermittel durch die von den Stirnflächen gebildeten Spalte hindurch zu den Verbindungsteilen 94 . . . 98 gelangen und mit diesen reagieren kann. Grundsätzlich könnte auch auf den Stirnflächen der Lagerteile 90 und 93 sowie der oberen Stirnfläche des Lagerteils 91 ein solcher Überzug aufgebracht werden. Dieser Überzug muß jedoch das für die axiale Lagerung bestimmte Rillenmuster freilassen, um dessen Funktion nicht zu beeinträchtigen. Anschließend werden die Lagerteile 90, 91 zusammengedrückt und mittels einer Schweißung auf dem gesamten äußeren Umfang miteinander verbunden. Durch diese Schweißung werden die beiden Teile nur geringfügig erwärmt; die für die Schweißung benötigten hohen Temperaturen entstehen lediglich an den Rändern der Stirnflächen.

Anschließend wird das Lagerteil 92 mit dem oberen Ende des Lagerteils 91 verbunden, in dem auf ähnliche Weise der Ring 97 an den Ring 96 angeschweißt wird.

Durch die Verbindung der Lagerteile 90, 91, 92 entsteht ein nach oben offenes Gefäß, in das Schmiermittel eingefüllt wird, nachdem durch eine geeignete Behandlung zuvor sichergestellt worden ist, daß die Innenflächen dieses Gefäßen von dem Schmiermittel benetzt werden können. Nachdem die Lagerachse 8 einer entsprechenden Behandlung unterzogen ist, wird sie in das Gefäß abgesenkt, wobei der größte Teil des darin befindlichen Schmiermittels aus diesem herausgedrängt wird. Zuletzt wird der Lagerteil 93 mit dem Lagerteil 92 verbunden, indem die ringförmigen Verbindungsteile 97 und 98 durch eine Schweißnaht miteinander verbunden werden.

Es ergibt sich dann das in Fig. 3 dargestellte Spiralrillenlager. Gegenüber den in der Praxis bisher benutzten Lagern zeichnet es sich durch einen geringeren Außendurchmesser insbesondere im Bereich des Abschnitts 14 aus, wodurch zugleich das Gewicht und der Materialverbrauch reduziert wird. Die Schraubverbindungen zwischen den miteinander zu verbindenden Lagerteilen sind nicht erforderlich, was die Bearbeitung erheblich vereinfacht. Durch den geringeren Materialverbrauch und den geringeren Bearbeitungsaufwand verbilligt sich die Herstellung des Lagers erheblich. Nachdem die Anodenscheibe 5 mit der Lagerschale 9 verbunden ist und der Rotor 10 (vergl. Fig. 1) an das Verbindungsteil 96 angeschweißt ist, wird das freien Ende der Lagerachse 8 mit dem Trägerkörper 7 verbunden und danach wird die so gebildete Anodenkonstruktion in die Röntgenröhre eingebaut.

Die Erfindung wurde vorstehend anhand eines Gleitlagers beschrieben, bei dem die Lagerachse 8 infolge des Abschnitts 14 einen T-förmigen Querschnitt hat. Die Erfindung ist aber auch in Verbindung mit anders geformten Lagerachsen - z.B. rein zylinderförmigen - und daran angepaßten Lagerschalen anwendbar. Außerdem wurde von einem Ausführungsbeispiel ausgegangen, bei dem die Lagerachse feststeht und die Lagerschale rotiert. Sie ist aber auch bei Gleitlagern anwendbar, bei denen die Lagerschale feststeht und die Achse rotiert.

## Patentansprüche

1. Drehanoden-Röntgenröhre mit einem Gleitlager, insbesondere einem Spiralrillenlager, das eine Lagerachse (8) und eine die Lagerachse umschließende, im wesentlichen Molybdän und/oder Wolfram oder deren Legierungen enthaltende und aus mindestens zwei Lagerteilen (90...93) bestehende Lagerschale (9) umfaßt, wobei zwischen der Lagerachse und der Lagerschale ein flüssiges Schmiermittel vorgesehen ist,
dadurch gekennzeichnet, daß die Lagerteile auf ihrer Außenseite mit einem Verbindungsteil (94...98) aus einem schweißfähigen Material versehen sind und daß die Verbindungsteile (94...98) durch eine Schweißnaht miteinander verbunden sind

2. Drehanoden-Röntgenröhre nach Anspruch 1,
dadurch gekennzeichnet, daß die einander zugewandten Stirnflächen zumindest eines Teils der Lagerteile (91,92) mit einem vom Schmiermittel nicht benetzbaren Überzug versehen sind.

3. Drehanoden-Röntgenröhre nach Anspruch 1,
dadurch gekennzeichnet, daß bei einer aus Molybdän oder einer Molybdänlegierung bestehenden Lagerschale (9) die Verbindungsteile (94...98) aus einer Eisen, Nickel und Kobalt enthaltenden Legierung bestehen.

4. Drehanoden-Röntgenröhre nach Anspruch 3,
dadurch gekennzeichnet, daß die Verbindungsteile (94...98) an die Lagerteile (90...93) angelötet sind

5. Drehanoden-Röntgenröhre nach Anspruch 1,
dadurch gekennzeichnet, daß die Verbindungsteile über eine Laser- Schweißung miteinander verbunden sind.

6. Drehanoden-Röntgenröhre nach Anspruch 1,
dadurch gekennzeichnet, daß die Verbindungsteile einen ringförmigen Innenquerschnitt haben und daß die damit verbundenen Bereiche der Lagerteile einen daran angepaßten Außenquerschnitt haben.

7. Drehanoden-Röntgenröhre nach Anspruch 1,
dadurch gekennzeichnet, daß die Verbindungsteile und die Lagerteile gemeinsame Stirnflächen haben.

## Claims

1. A rotary-anode X-ray tube, comprising a sleeve bearing, notably a spiral groove bearing, which comprises a bearing shaft (8) and a bearing shell (9) which encloses the bearing shaft, contains essentially molybdenum and/or tungsten or alloys thereof, and consists of at least two bearing portions (90 ... 93), a liquid lubricant being present between the bearing shaft and the bearing shell,
characterized in that on the outer side of the bearing portions there are provided connection elements (94 ... 98) which are made of a weldable material, and that the connection elements (94 ... 98) are connected to one another by way of a welded joint.

2. A rotary-anode X-ray tube as claimed in Claim 1,
characterized in that the facing end faces of at least a part of the bearing portions (91, 92) are provided with a coating which cannot be wetted by the lubricant.

3. A rotary-anode X-ray tube as claimed in Claim 1,
characterized in that in the case of a bearing shell (9) consisting of molybdenum or a molybdenum alloy, the connection elements (94 ... 98) consist of an alloy containing iron, nickel and cobalt.

4. A rotary-anode X-ray tube as claimed in Claim 3,
characterized in that the connection elements (94 ... 98) are soldered to the bearing portions (90 ... 93).

5. A rotary-anode X-ray tube as claimed in Claim 1,
characterized in that the connection elements are connected to one another by laser welding.

6. A rotary-anode X-ray tube as claimed in Claim 1,
characterized in that the connection elements have an annular inner cross-section and that the parts of the bearing portions connected thereto have a matching outer cross-section.

7. A rotary-anode X-ray tube as claimed in Claim 1,
characterized in that the connection elements and the bearing portions have common end faces.

## Revendications

1. Tube à rayons X à anode tournante avec un palier à glissement, en particulier un palier à rainures hélicoïdales, qui comprend un axe de palier (8) et une coquille de palier (9) renfermant l'axe de palier, contenant essentiellement du molybdène et/ou du tungstène ou leurs alliages et composée d'au moins deux parties de palier (90...93), un lubrifiant liquide étant prévu entre l'axe de palier et la coquille de palier,
caractérisé en ce
que les parties de palier sont dotées sur leur face externe d'une partie de liaison (94...98) en un matériau soudable et que les parties de liaison (94...98) sont reliées entre elles par une soudure.

2. Tube à rayons X à anode tournante selon la revendication 1,
caractérisé en ce
que les faces d'about tournées l'une vers l'autre d'au moins une partie des parties de palier (91, 92) portent un revêtement non mouillable par un lubrifiant.

3. Tube à rayons X à anode tournante selon la revendication 1,
caractérisé en ce
que les parties de liaison (94...98) se composent d'un alliage contenant du fer, du nickel et du cobalt pour une coquille de palier (9) composée de molybdène ou d'un alliage de molybdène.

4. Tube à rayons X à anode tournante selon la revendication 3,
caractérisé en ce
que les parties de liaison (94...98) sont brasées aux parties de palier (90...93).

5. Tube à rayons X à anode tournante selon la revendication 1,
caractérisé en ce
5 que les parties de liaison sont reliées entre elles par l'intermédiaire d'un soudage au laser.

6. Tube à rayons X à anode tournante selon la revendication 1,
caractérisé en ce
que les parties de liaison ont une section intérieure circulaire et que les zones ainsi reliées des parties de palier ont une section extérieure adaptée à cet effet.

7. Tube à rayons X à anode tournante selon la revendication 1,
caractérisé en ce
que les parties de liaison et les parties de palier ont des faces d'about communes.
